# EUROPEAN PATENT APPLICATION

(11) **EP 2 039 924 A2**
(43) Date of publication of application: **25.03.2009**
(21) Application number: 08014586.5
(22) Date of filing: 16.08.2008
(51) Int. Cl.: F02M 37/22

(54) **Filters**

(30) Priority: 19.09.2007 GB 0718223
(71) Applicant: Agco GmbH & Co. OHG, 87616 Marktoberdorf (DE)
(72) Inventor: Kreuzer, Josef, 87656 Germaringen (DE)
(74) Representative: Morrall, Roger

(57) **Abstract**

A filter installation has a pivotably mounted flap (13), a filter head (15) mounted on the flap, a filter cartridge (16) mounted on the filter head. Flexible piping (18,19) is provided for supplying fluid to be filtered to the filter head and removing filtered fluid from the filter head. The flexible piping allows the flap (13) to be pivoted to an access position in which the cartridge is readily accessible for installation or removal. The installation is particularly suitable to be used on a vehicle such as a tractor in which the pivotable flap is the door on a battery box or other compartment of the vehicle. The filter cartridge can be used to filter biofuel for an engine of the tractor or to filter hydraulic fluid or transmission fluid.

## Description

This invention relates to filters an in particular to so-called cartridge filters used to filter fluid such as engine fuel or hydraulic oil in which a filter cartridge is screw-threaded mounted in a general vertical position below or above a filter head.

Modem agricultural tractors are very congested and lacking in space and it is often difficult to find locations for mounting such filters in a vertical position and which also allow easy access for changes of the filter cartridge.

It is an object of the present invention to provide a filter installation which overcomes the above problem.

Thus in accordance with the present invention a fluid filter installation comprises a pivotably mounted flap, a filter head mounted on the flap, a filter cartridge mounted on a the filter head, and flexible piping for supplying fluid to be filtered to the filter head and removing filtered fluid from the filter head, the flexible piping allowing the flap to be pivoted to an access position in which the cartridge is readily accessible for installation or removal.

Conveniently the pivotable flap may comprise a door on a battery box or other compartment on a vehicle such as a agricultural tractor.

Such an installation is particularly suitable where an additional cartridge type filter is required on a vehicle, for example, an additional fuel filter which is required if a diesel engine vehicle is converted to run on bio-fuel, which, being courser and containing bio mass particles, requires additional filtering before the fuel is supplied to the engine injectors.

The present invention will now be described, by way of example only, with reference to the accompanying drawings in which:-
- Figure 1: shows a perspective view of a battery box used on an agricultural tractor which incorporates a filter installation in accordance with the present invention with its door open;
- Figure 2: is a view in the direction of arrow X of Figure 1;
- Figure 3: is a view in the direction of arrow X with the battery box door closed, and
- Figure 4: is a section on the line A-A of figure 3.

Referring to the drawings, these show a tractor cab step assembly 10 which includes a battery box 11 housing a battery 12. The battery box has a door 13 which is pivoted about a vertical axis and on the inside of this door is mounted a bio fuel filter 14 which comprises a filter head 15 and a renewable filter cartridge 16 which is screwed on to the filter head in a conventional manner. The step assembly 10 may also house at least part of a tank for the bio-fuel which may be for example a rape seed methyl ester.

An electric fuel pump 17 powered via cables 21 is provided in a flexible fuel inlet line 18 connected with the fuel tank and flexible fuel outlet line 19 extends from the filter head into a fuel supply system for the injectors of an associated diesel engine which is adapted to run on the bio-fuel.

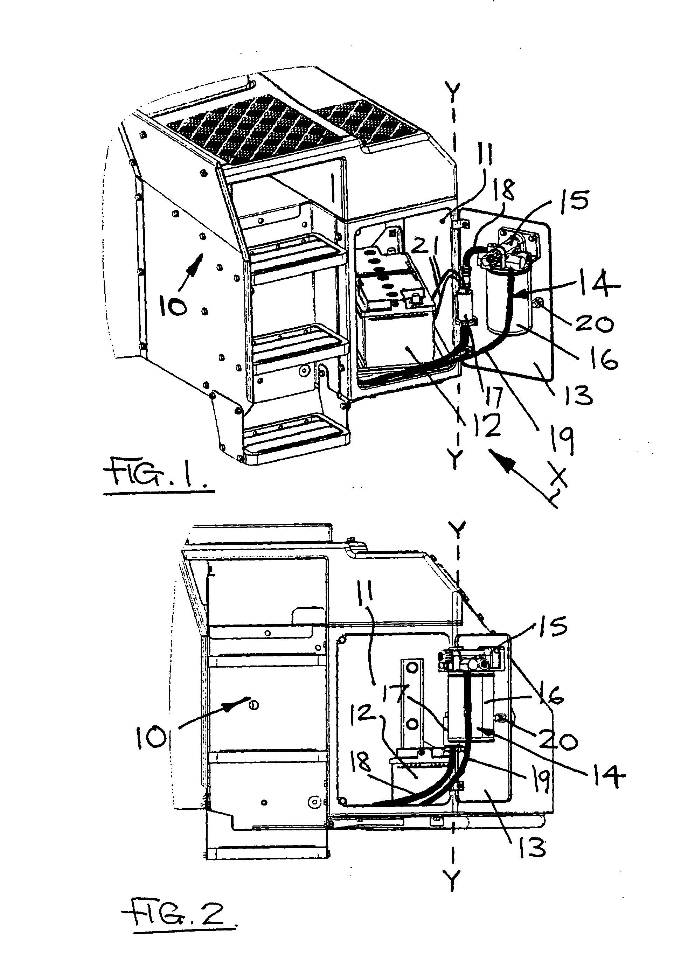

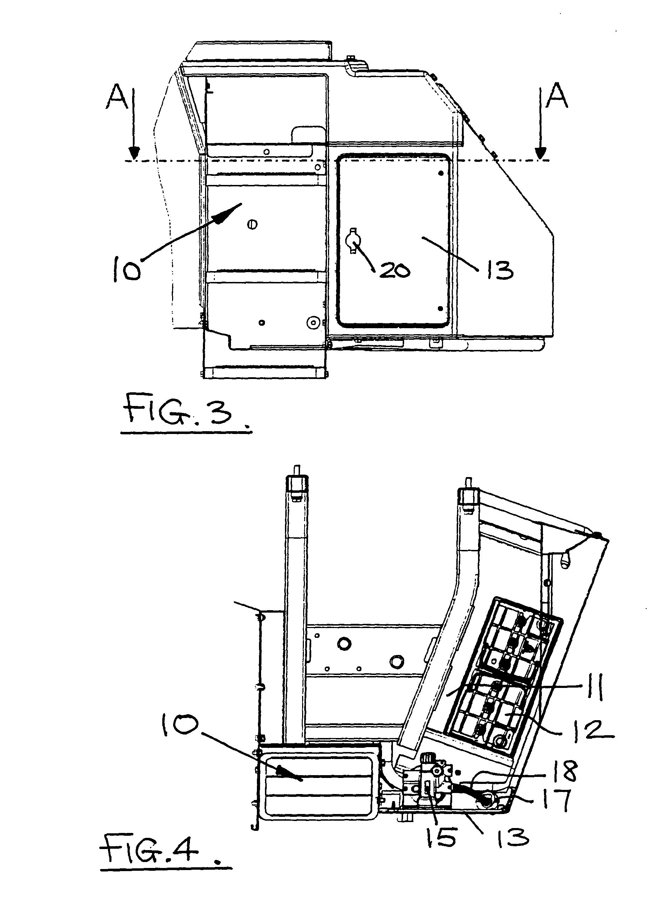

The door 13 is provided with a lock 20 and, as will be appreciated, when the door is in the closed position (see Figure 4) the filter 14 is located within the battery box 11 where it can be secured using the lock 20. In order to access the filter for replacement of the cartridge 16 the door is simply opened and the filter is swung to the access position shown in Figures 1 and 2 where the filter remains connected with the fuel supply systems via the flexible lines 18 and 19.

Although the invention has been described above in relation to a filter used to filter a bio-fuel to remove course bio mass particles etc it will be appreciated that this type of filter installation could be used, for example, to mount a filter used in a hydraulic circuit provided on the tractor or could be used to filter cooling or lubricating oil used in connection with a transmission of the tractor.

## Claims

1. A filter installation **characterised by** comprising a pivotably mounted flap (13), a filter head (15) mounted on the flap, a filter cartridge (16) mounted on a the filter head, and flexible piping (18,19) for supplying fluid to be filtered to the filter head and removing filtered fluid from the filter head, the flexible piping allowing the flap to be pivoted to an access position in which the cartridge is readily accessible for installation or removal.

2. An installation according to claim 1 **characterised in that** the filter cartridge (16) is mounted in generally vertical position below or above the filter head (15) and the flap (13) is pivotable about an generally vertical axis so that the cartridge remains generally vertically below or above the filter head when pivoted to the access position.

3. An installation according to claim 1 or 2 on a vehicle such as a tractor **characterised in that** the pivotable flap (13) comprises a door on a battery box (11) or other compartment of the vehicle.

4. An installation according to any one of claims 1 to 3 **characterised in that** the vehicle has an internal combustion engine an the filter installation is used to filter bio-fuel for the engine of the vehicle.

5. An installation according to claim 4 **characterised in that** an electric fuel pump (17) is also mounted on the pivotable flap (13).

6. An installation according to any one of the claims 1 to 3 **characterised in** being used to filter hydraulic fluid in a hydraulic circuit.

7. An installation according to any one of claims 1 to 3 **characterised by** being used to filter transmission oil.

8. An installation according to any one of claims 1 to 7 which forms part of a cab step assembly (10).
